# EUROPÄISCHE PATENTANMELDUNG

(11) **EP 0 521 499 A1**
(43) Veröffentlichungstag der Anmeldung: **07.01.1993**
(21) Anmeldenummer: 92111194.4
(22) Anmeldetag: 02.07.1992
(51) Int. Cl.: B01D 9/00

(54) **Verfahren und Vorrichtung zum Trennen und Reinigen von Stoffen durch fraktionierende Schmelzkristallisation**

(30) Priorität: 05.07.1991 DE 4122262
(71) Anmelder: HOECHST AKTIENGESELLSCHAFT, 65926 Frankfurt am Main (DE)
(72) Erfinder: Steiner, Rudolf, Prof. Dr., W-8520 Erlangen-Kosbach (DE); Rittner, Siegbert, Dr., W-6082 Mörfelden (DE); Heffels, Stefan, Dr., W-6233 Kelkheim (Taunus) (DE)

(57) **Zusammenfassung**

Bei dem Verfahren zum Trennen und Reinigen von Stoffen durch fraktionierende Schmelzkristallisation wird die Schmelze kontinuierlich einer Kristallisation zugeführt und die Restschmelze vom Kristallisat abgetrennt. Danach wird das Kristallisat aufgeheizt, läßt es schwitzen und trennt das Schitzoel ab. Die dafür vorgesehene Vorrichtung besteht aus einer kontinuierlich umlaufenden Transporteinrichtung (1), die mit einer Einrichtung (2) zum Zuführen der Schmelze und einer Einrichtung (3) zum Abführen des gereinigten Produkts versehen ist. Zwischen diesen Einrichtungen (2,3) sind Bereiche (4,5) vorgesehen, bei denen der erste Bereich (4) eine Einrichtung (7) zum Kristallisieren der Schmelze und eine Einrichtung (8) zum Abtrennen der Restschmelze, und der zweite Bereich (5) eine Einrichtung (9) zum Schwitzen des Kristallisats und eine Einrichtung (10) zum Abtrennen des Schwitzöls aufweist.

## Beschreibung

Die Erfindung betrifft ein kontinuierliches Verfahren und eine Vorrichtung zum Trennen und Reinigen von Stoffen durch fraktionierende Schmelzkristallisation.

Unter fraktionierender Schmelzkristallisation versteht man ein Verfahren zur Trennung oder Reinigung von Stoffen, bei dem aus einer Schmelze eine oder mehrere Komponenten auskristallisiert und abgetrennt werden, während andere Komponenten im nicht erstarrten Teil der Schmelze, der sogenannten Restschmelze verbleiben. Die fraktionierende Schmelzkristallisation wird bevorzugt angewendet bei der Trennung von Stoffen mit eng beieinander liegenden Siedepunkten oder Azeotropenpunkten sowie bei der Reinigung temperaturempfindlicher Substanzen. Die verschiedenen technischen Ausführungsmöglichkeiten der fraktionierenden Schmelzkristallisation verfolgen das Ziel, bei der Trennung der Komponenten möglichst große Ausbeuten und hohe Reinheiten in angemessenen Kristallisationszeiten zu erreichen. Hierfür gibt es prinzipiell zwei Wege:
1. Verfahren, bei denen die Schmelze durch Abkühlen in eine Kristallsuspension überführt wird, die in einem weiteren Verfahrensschritt, meist durch eine mechanische Flüssigkeitsabtrennung, in Feststoff oder Restschmelze getrennt wird.
2. Verfahren, bei denen aus der Schmelze an gekühlten Flächen zusammenhängende Kristallschichten abgeschieden werden, wobei die restliche Flüssigkeit hiervon ohne weitere Trennoperation abfließen kann.

Nach dem letztgenannten Verfahrensprinzip können sehr hohe Reinheiten erzielt werden, insbesondere wenn man eine Betriebsweise anwendet, die durch folgende Teilschritte gekennzeichnet ist:
Zunächst wird ein Teil der Schmelze durch Kühlung auskristallisiert, danach wird die Restschmelze vom Kristallisat abgetrennt und letzteres unter langsamer Temperaturerhöhung wieder etwas angeschmolzen, um noch anhaftende oder zwischen den Kristallen eingeschlossene Restschmelze abzutrennen, bevor in einem letzten Schritt das so gereinigte Kristallisat als Ganzes wieder aufgeschmolzen wird. Den Zwischenschritt des Entfernens anhaftender oder eingeschlossener Verunreinigungen bezeichnet man im betrieblichen Sprachgebrauch als "Schwitzen" oder "Abtropfen".

Auch hochkonzentrierte Lösungen mit einem vergleichsweise geringen Lösemittelanteil können nach diesem Verfahrensprinzip gereinigt werden, weil sie in ihrem Erstarrungsverhalten Schmelzen ähnlich sind.

Diese Art der fraktionierenden Schmelzkristallisation und der Bildung zusammenhängender Kristallschichten mit den Teilschritten Kristallisation/Schmelzeabtrennung/Schwitzen/Aufschmelzen wird technisch z.B. in Rohrbündel-Kristallisatoren durchgeführt. Das zu trennende Stoffgemisch wird als Schmelze in die Rohre - bei anderen Ausführungen auch zwischen die Rohre - des Apparates gefüllt. Dann wird durch langsames Abkühlen eine Komponente als Kristallisat abgeschieden, während die flüssige Phase daran verarmt. Sobald eine gewisse Feststoffmenge auskristallisiert ist, wird die verbleibene Schmelze entfernt. Durch langsame Temperaturerhöhung werden anschließend aus der Kristallschicht zunächst stärker, dann weniger stark, verunreinigte Fraktionen (Tropföle) abgetrennt. Bei Erreichen des Schmelzpunktes der zu gewinnenden Substanz schmilzt diese in meist hoher Reinheit ab. Die Kristallisation erfordert relativ lange Zeiten, weil der Stoff- und Wärmetransport zu den Abscheideflächen nur durch freie Konvektion erfolgt.

Ferner ist bekannt, die zu trennende Kristallschmelze am oberen Ende eines senkrecht stehenden Rohres oder Rohrbündels als Rieselfilm aufzugeben. Durch Kühlen der Rohre von außen bildet sich an der Innenseite eine zusammenhängende Kristallschicht, während die Schmelze mehrfach umgepumpt wird. Nach beendeter Kristallisation erfolgt durch gesteuertes Aufheizen wieder ein partielles Abschmelzen der im Kristallisat befindlichen Verunreinigungen und anschließend ein Aufschmelzen der gereinigten Kristallschicht. Da der Stoff- und Wärmetransport bei diesem Verfahren nur durch dünne Schichten erfolgt, reichen relativ kurze Kristallisationszeiten aus.

Ähnlich aufgebaute Kristallschichten wie beim Rieselfilmkristallisator entstehen bei einem Verfahren, bei dem die Schmelze voll das Rohr bzw. das Rohrbündel durchströmt, während sie gleichzeitig von außen gekühlt wird. Nach Abtrennung der Restschmelze wird das Kristallisat durch einen Schwitzvorgang gereinigt.

Allen bekannten technischen Verfahren, bei denen zusammenhängende Kristallschichten entstehen, ist aber gemeinsam, daß sie nur nach einem Zeittakt-Verfahren, also nicht kontinuierlich, betrieben werden können. In den geschilderten Apparaten wird zunächst eine gewisse Zeit unter Kühlung kristallisiert, dann nach Abtrennen der Restschmelze unter langsamem Aufheizen der Schwitzprozeß durchgeführt und schließlich bei höherer Temperatur das gereinigte Kristallisat aufgeschmolzen. Da diese Teilschritte zeitlich nacheinander ablaufen, benötigt man relativ große Apparatevolumina, erzielt also nur verhältnismäßig kleine Raum-Zeit-Ausbeuten. Nachteilig ist auch der ständige Temperaturwechsel der Apparate, weil dadurch während des Kristallisationsvorgangs ein Vielfaches der Kristallisationswärme abgeführt und beim anschließenden Aufschmelzen wieder zugeführt werden muß. Außerdem tritt eine erhöhte Beanspruchung der Apparate auf.

Hier will die Erfindung Abhilfe schaffen.
Die Aufgabe wird durch ein Verfahren der eingangs genannten Art gelöst, bei dem die Schmelze kontinuierlich einer Kristallisation zugeführt, die Restschmelze vom Kristallisat abgetrennt, danach das Kristallisat zum Schwitzen aufgeheizt und das Schwitzöl (Tropföl) entfernt wird.

Die Restschmelze kann in die Kristallisation zurückgeführt und das Kristallisat nach dem Schwitzen geschmolzen werden.

Die Aufgabe wird ferner durch eine Vorrichtung zum Durchführen einer fraktionierenden Schmelzkristallisation gelöst, die dadurch gekennzeichnet ist, daß die Transporteinrichtung mit Einrichtungen zum Zuführen der Kristallschmelze und zum Abführen des gereinigten Produktes versehen ist und zwischen diesen Einrichtungen Bereiche vorgesehen sind, bei denen der erste Bereich eine Einrichtung zum Kristallisieren der Schmelze und Abtrennen der Restschmelze, der zweite Bereich eine Einrichtung zum Schwitzen des Kristallisats und zum Abtrennen des Tropföls aufweist.

Die Transporteinrichtung kann aus einem flüssigkeitsdurchlässigen Band, die Einrichtungen zum Kristallisieren der Schmelze aus einem Kühler und zum Schwitzen der Kristalle aus einem Erhitzer bestehen. Die Transporteinrichtung kann in Laufrichtung ansteigen, sie kann quer zur Laufrichtung geneigt sein, sie kann mit Umlenkrollen zum Auf- und Abwärtsneigen des Transportbandes in seiner Laufrichtung versehen sein. Die Einrichtungen zum Kristallisieren und Schwitzen können mit Temperaturreglern versehen sein. Dem Bereich zum Schwitzen kann eine Einrichtung zum Aufschmelzen des Kristallisats nachgeordnet sein.

Die Vorteile der Erfindung sind hauptsächlich im kontinuierlichen Ablauf des Verfahrens zu sehen, bei dem die verschiedenen Teilschritte (Kristallisation, Restschmelzeabtrennung, Schwitzen und gegebenenfalls erneutes Aufschmelzen) während eines Zyklus zeitgleich in verschiedenen Bereichen der Vorrichtung ablaufen.

Beispiele für die Vorrichtung sind in den Figuren schematisch dargestellt. Es zeigt
- Figur 1: die Vorrichtung perspektivisch;
- Figur 2: die Vorrichtung mit ab- und aufsteigenden Bandabschnitten in Laufrichtung und
- Figur 3: die Vorrichtung quer zur Laufrichtung des Bandes geneigt.

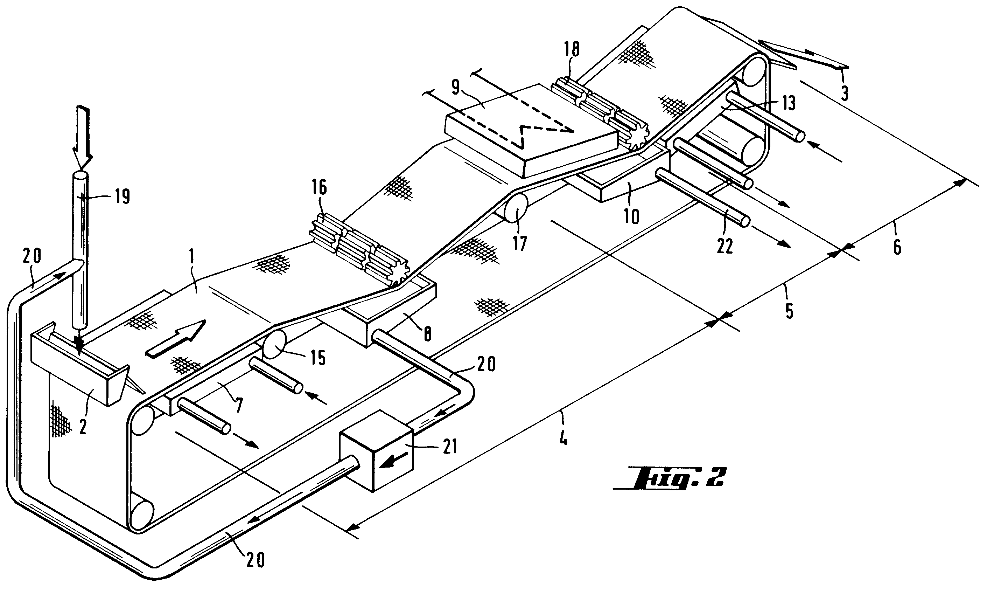

Die Vorrichtung besteht aus einer Transporteinrichtung (1), einem umlaufenden Band, und ist mit einer Einrichtung (2) zum Zuführen der Kristallschmelze und einer Einrichtung (3) zum Abführen des gereinigten Produkts versehen. Zwischen diesen Einrichtungen (2, 3) sind Bereiche (4, 5, 6) vorgesehen. Bereich (4) weist Kühleinrichtungen (7) zum Abkühlen und Kristallisieren der Schmelze sowie Tröge oder Rinnen (8) zum Auffangen der Restschmelze auf, Bereich (5) Heizeinrichtungen (9) zum Schwitzen der Kristalle sowie Auffangeinrichtungen (10) für das Schwitzöl und Bereich (6) Heizeinrichtungen (11) zum Schmelzen des reinen Kristallisats. Soll gereinigtes Produkt kristallin entnommen werden, kann gemäß Figur 2 statt der Heizeinrichtung (11) eine Kühleinrichtung (13) im Bereich (6) angeordnet sein. Das Kristallisat wird über die Abführeinrichtung (3) entnommen. Die Restschmelzeabtrennung kann durch eine Quetschrolle (14) verbessert werden. Die Rollen (15, 16, 17 und 18) dienen der Umlenkung der Transporteinrichtung, wobei die Rollen (16 und 18) bei entsprechender Gestaltung gleichzeitig als Quetschrollen dienen können. Die Schmelze wird der Vorrichtung über Leitung (19) zugeführt und die Restschmelze über Leitung (20) in die Zuführung (2) zurückgeführt. Leitung (20) kann eine Pumpe (21) enthalten. Die Tropföle (Schwitzöle) werden über Leitung (22) abgeführt.

Die Neigung des Bandes (1) und/oder dessen Durchlässigkeit müssen so gewählt werden, daß während der Schmelzabtrennung und des Schwitzvorganges die Kristalle auf dem Band haften bleiben, die Restschmelze bzw. die Schwitzölfraktionen aber abfließen können. Für den effektiv einzustellenden Neigungswinkel bzw. die Durchlässigkeit spielt die Rauhigkeit des Bandes ebenso eine Rolle wie die Haftfähigkeit der sich bildenden Kristalle und die physikalischen Eigenschaften der Schmelze, insbesondere deren Viskosität und Grenzflächenspannung. Das Aufbringen der Schmelze auf das Band kann z.B. durch Aufgießen, Aufstreichen, Aufsprühen oder durch Untertauchen desselben in ein Schmelzebad erfolgen. Bei Bedarf kann der zu reinigende Stoff aber auch in fester Form aufgegeben und dort aufgeschmolzen werden. Als Bänder können u.a. geschlossene, polierte oder aufgerauhte Stahlbänder, aber auch gelenkige, lamellenartige oder schuppenförmige Bänder, ferner durchlässige, gelochte, perforierte oder gewebte Bänder, sowie mit Haftstellen versehene Bänder verwendet werden. Die während der Kristallisation abzuführende Wärme kann z.B. durch einen Wärmeträger, wie z.B. Kühlwasser auf der Rückseite des Bandes abgeführt werden aber auch durch Gleiten des Bandes über eine geeignete Wärmetauscherfläche. Die Wärme für das Schwitzen und gegebenenfalls Wiederaufschmelzen kann in ähnlicher Weise durch Heizen, z.B. der Bandrückseite mittels eines Wärmeträgers, oder durch den Kontakt mit einer Wärmetauscherfläche, oder durch Strahlung zugeführt werden. Die Neigung des Bandes muß keinesfalls bei allen Teilschritten gleich groß sein; beispielsweise kann es auch zweckmäßig sein, den Kristallisationsteil ohne Neigung zu betreiben und bei der nachfolgenden Schmelzabtrennung, dem Schwitzen oder Aufschmelzen den Neigungswinkel den jeweiligen Erfordernissen anzupassen.

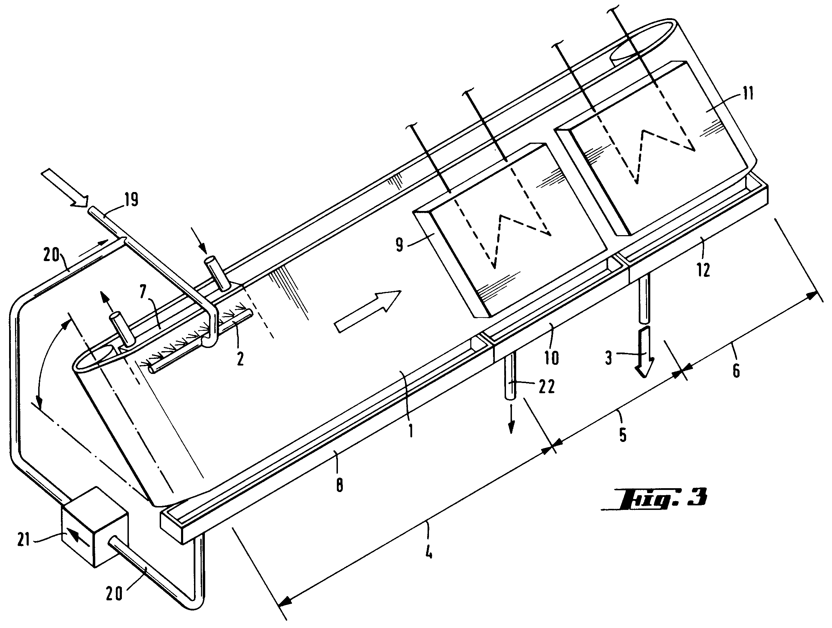

Besonders gute Reinigungseffekte erreicht man, wenn die ablaufenden Schmelzen segmentweise entgegen der Bewegungsrichtung des Bandes ablaufen, weil damit ein Gegenstromeffekt erzeugt wird, der die Trennwirkung in der Art einer Wäsche noch erhöht. Dies ist bei allen Ausführungsformen möglich, bei denen das Band in Laufrichtung ansteigt oder zumindest ansteigende Abschnitte besitzt (Figuren 2 und 3).

Eine Durchlässigkeit des Bandes ist nicht bei allen Betriebsarten zwingend erforderlich. Gleichwohl ist es bei etlichen Betriebsweisen zur Verbesserung des Schmelzablaufs zweckmäßig, mit durchlässigen Bändern zu arbeiten. Die Abtrennung der Verunreinigung aus der Kristallschicht kann außerdem dadurch unterstützt werden, daß das auf dem Band befindliche Kristallisat nach dem Abfließen der Restschmelze oder nach dem Schwitzvorgang mit Walzen oder ähnlichen Vorrichtungen abgepreßt oder verdichtet wird. Das Band oder die bandähnliche Vorrichtung werden bei dem erfindungsgemäßen Verfahren üblicherweise kontinuierlich mit gleichbleibender Geschwindigkeit bewegt, prinzipiell ist aber auch eine wechselnde Geschwindigkeit möglich.

Bei der technischen Gestaltung des Verfahrens kann es vorteilhaft sein, die Temperatur des zu trennenden Stoffgemisches auf dem Band sektionsweise zu regeln, so daß sich ein Temperaturprofil über die Bandlänge ergibt. In der Kristallisationszone soll die Temperatur in der Bewegungsrichtung des Bandes sinken, während des Schwitzvorgangs wieder leicht ansteigen und während des Wiederaufschmelzens der Kristallisate mindestens auf die Schmelztemperatur des gereinigten Kristallisats ansteigen.

Mit dem erfindungsgemäßen Verfahren ist auch eine Kombination aus Stoffreinigung mit integrierter Konfektionierung möglich. So kann erforderlichenfalls nach Beendigung der Restschmelzeabtrennung und des Schwitzvorgangs das Produkt erneut so abgekühlt werden, daß es am Ende des Bandes als Feststoff anfällt. Ob das Verfahren auf einem einzigen Band wie in den Figuren dargestellt oder auf mehreren hintereinander oder übereinander angeordneten Bändern durchgeführt wird, ist eine Frage der technischen Detailgestaltung.

### Beispiel 1

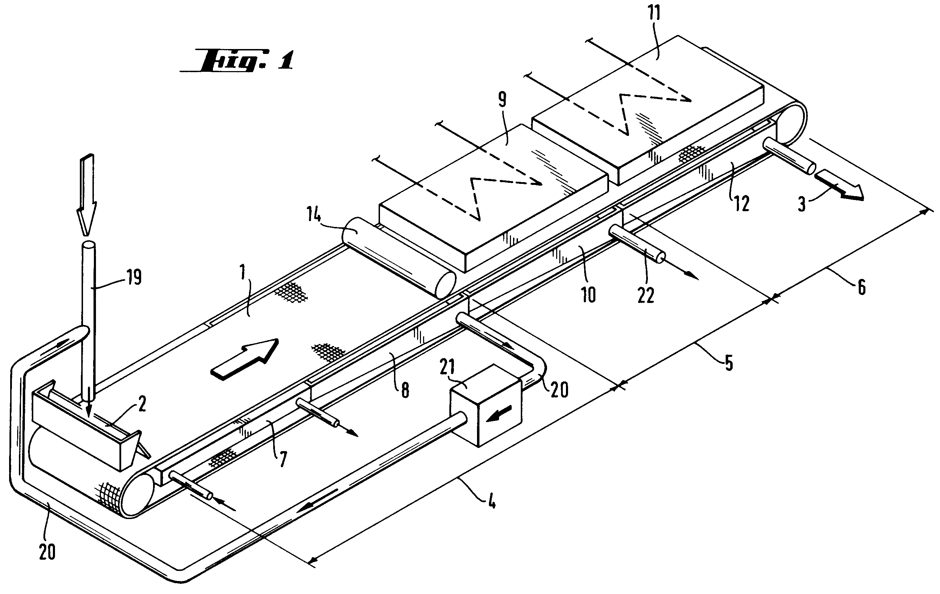

Auf die Oberfläche eines bewegten Edelstahlbandes von 280 mm Breite und 5 m Länge, das in Laufrichtung ansteigt (Figur 1) wurde ein flüssiges Crotonsäuregemisch aus einer Destillationsanlage einer Crotonaldehydoxidation mit einem Erstarrungspunkt von ca. 69°C und folgender Zusammensetzung aufgegeben:

| | |
|---|---|
| trans-Crotonsäure: | 95,5 % |
| cis-Crotonsäure: | 3-4 % |
| Crotonaldehyd: | 0,6 % |
| andere organische Verunreinigungen: | Rest auf 100 % |

Im ersten Abschnitt (4) des bewegten Bandes (1) wird die Schmelze auf 20°C abgekühlt. Es bildet sich eine poröse Kristallschicht von ca. 5 mm Höhe. Der Ablauf der Restschmelze wird durch die Quetschrolle (14) unterstützt. Im zweiten Abschnitt (5) wird die Temperatur der Kristallschicht innerhalb von einer Stunde solange gesteigert, bis das ablaufende Schwitzöl einen Erstarrungspunkt von ca. 70,5°C erreicht. Schließlich wird im Abschnitt (6) das reine Kristallisat vollständig aufgeschmolzen. Die isolierte gereinigte trans-Crotonsäure hatte die folgenden Kennzahlen:

| | |
|---|---|
| Erstarrungspunkt: | 71,1°C |
| trans-Crotonsäure: | 99,3 % |
| cis-Crotonsäure: | 0,7 % |
| Farbzahl (Hazen): | 0-5. |

Die Ausbeute an gereinigter trans-Crotonsäure betrug ca. 4 300 g/h; an Restschmelze wurde vom Band etwa 415 g/h und an Schwitzöl rund 250 g/h abgetrennt.

### Beispiel 2

Beispiel 1 wurde dahingehend abgeändert, daß während des Schwitzprozesses die Kristallschicht mit einer Walze von oben leicht gepreßt wurde (Figur 2). Dadurch erhöhte sich die Menge der Schwitzfraktion von 250 auf 300 g/h, wodurch die Qualität des Produktes wie folgt verbessert werden konnte:

| | |
|---|---|
| Erstarrungspunkt: | 71,3°C |
| trans-Crotonsäure: | 99,7 % |
| cis-Crotonsäure: | 0,2-0,3 %. |

### Beispiel 3

Auf ein bewegtes Band aus Stahllamellen, das in Laufrichtung verschiedene Neigungsabschnitte aufweist (Figur 2) wird eine verunreinigte Trioxanschmelze mit einer Zusammensetzung von etwa 53 % Trioxan, 34 % Wasser, 12 % Formaldehyd, 0,62 % Methanol, 0,08 % Ameisensäure in einer Schichthöhe von ca. 5 mm (entsprechend einer Bandkapazität von etwa 7 kg/m²h) aufgegeben. Die Temperatur dieses Ausgangsgemisches liegt nur wenig über dem Erstarrungspunkt von 43,6°C.

Durch Abkühlung mit einem Kühlmedium von 30°C wird in der Kristallisationszone eine zusammenhängende, gut am Band haftende Kristallschicht erzeugt. In der darauf folgenden Zone wird eine Restschmelze mit einem Erstarrungspunkt von 23,4°C, in der Schwitzzone ein Schwitzöl mit einem Erstarrungspunkt von 33,7°C abgezogen. Dies zeigt deutlich, daß sich die Verunreinigungen des Trioxans in der Restschmelze und dem Schwitzöl anreichern. Beim Wiederaufschmelzen des Kristallisats in der letzten Zone ergibt sich ein gereinigtes Produkt mit einem Erstarrungspunkt von 45,8°C. Die Mengenverhältnisse zwischen Restschmelze, Schwitzöl und gereinigtem Produkt betragen dabei etwa 10:25:65. Das Produkt hat eine Reinheit von etwa 76 %.

### Beispiel 4

Auf der Vorrichtung wie Beispiel 3 wird wiederum eine 53 %ige Trioxanschmelze mit den obengenannten Verunreinigungen in einer Schichthöhe von 5 mm aufgebracht und fraktionierend kristallisiert. Hierbei wird die Temperatur des Kühlmediums aber abschnittsweise bis auf eine Endtemperatur von 3°C gesenkt. In den folgenden Zonen werden eine Restschmelze mit einem Erstarrungspunkt von -4,8°C sowie nach Wiederaufheizen auf etwa 40°C zwei Schwitzöle mit Erstarrungspunkten von 36,8°C und 37,4°C erhalten. Das gereinigte Endprodukt schmilzt bei 48,3°C. Die Mengenverhältnisse von Restschmelze, Schwitzölen und Reinprodukt liegen bei 13:32:53. Das Produkt besitzt eine Reinheit von etwa 81 %.

## Patentansprüche

1. Verfahren zum Trennen und Reinigen von Stoffen durch fraktionierende Schmelzkristallisation, dadurch gekennzeichnet, daß man die Schmelze kontinuierlich einer Kristallisation zuführt und die Restschmelze vom Kristallisat abtrennt, danach das Kristallisat aufheizt, schwitzen läßt und das Schwitzöl (Tropföl) abtrennt.

2. Verfahren nach Anspruch 1, dadurch gekennzeichnet, daß man die Restschmelze in die Kristallisation zurückführt und das reine Kristallisat schmilzt.

3. Vorrichtung zum Durchführen einer fraktionierenden Schmelzkristallisation, bestehend aus einer kontinuierlich umlaufenden Transporteinrichtung, dadurch gekennzeichnet, daß die Transporteinrichtung (1) mit einer Einrichtung (2) zum Zuführen der Schmelze und einer Einrichtung (3) zum Abführen des gereinigten Produkts versehen ist und zwischen diesen Einrichtungen (2, 3) Bereiche (4, 5) vorgesehen sind, bei denen der erste Bereich (4) eine Einrichtung (7) zum Kristallisieren der Schmelze und einer Einrichtung (8) zum Abtrennen der Restschmelze, der zweite Bereich (5) eine Einrichtung (9) zum Schwitzen des Kristallisats und einer Einrichtung (10) zum Abtrennen des Tropföls aufweist.

4. Vorrichtung nach Anspruch 3, dadurch gekennzeichnet, daß die Transporteinrichtung (1) aus einem flüssigkeitsdurchlässigen Band, die Einrichtungen zum Kristallisieren der Schmelze aus einem Kühler (7) und zum Schwitzen der Kristalle aus einem Erhitzer (9) besteht.

5. Vorrichtung nach Anspruch 3, dadurch gekennzeichnet, daß die Transporteinrichtung (1) in Laufrichtung ansteigt.

6. Vorrichtung nach Anspruch 3, dadurch gekennzeichnet, daß die Transporteinrichtung (1) quer zu ihrer Laufrichtung geneigt ist.

7. Vorrichtung nach Anspruch 3, dadurch gekennzeichnet, daß die Transporteinrichtung (1) mit Umlenkrollen (15, 16, 17, 18) zum Auf- und Abwärtsneigen der Transporteinrichtung (1) in ihrer Laufrichtung versehen ist.

8. Vorrichtung nach Anspruch 3, dadurch gekennzeichnet, daß die Einrichtungen (7, 9) zum Kristallisieren und Schwitzen mit Temperaturreglern versehen sind.

9. Vorrichtung nach Anspruch 3, dadurch gekennzeichnet, daß dem Bereich (5) zum Schwitzen ein Bereich (6) mit einer Einrichtung (11) zum Aufschmelzen des Kristallisats nachgeordnet ist.
